# EUROPÄISCHE PATENTSCHRIFT

(11) **EP 0 485 514 B1**
(45) Veröffentlichungstag und Bekanntmachung des Hinweises auf die Patenterteilung: **01.06.1994**
(21) Anmeldenummer: 90913171.6
(22) Anmeldetag: 04.08.1990
(51) Int. Cl.: A22C 25/18, B23Q 11/02

(54) **VORRICHTUNG ZUM TEILEN VON TIEFGEFRORENEN LEBENSMITTELN MIT RÜCKGEWINNUNG FÜR BEIM TEILEN ZERSPANTER LEBENSMITTEL**
DEVICE FOR CUTTING UP DEEP-FROZEN FOODSTUFFS WITH RECOVERY OF THE FRAGMENTS PRODUCED DURING CUTTING
DISPOSITIF POUR DECOUPER DES DENREES ALIMENTAIRES SURGELEES AVEC RECUPERATION DES FRAGMENTS PRODUITS A CETTE OCCASION

(30) Priorität: 11.08.1989 DE 3926533
(43) Veröffentlichungstag der Anmeldung: 20.05.1992
(73) Patentinhaber: HEINZ NIENSTEDT MASCHINENFABRIK GMBH, D-45721 Haltern (DE)
(72) Erfinder: NIENSTEDT, Heinz, D-4350 Recklinghausen (DE)
(74) Vertreter: Cohausz & Florack Patentanwälte
(86) Internationale Anmeldenummer: EP9001280
(87) Internationale Veröffentlichungsnummer: WO9101645

(56) Entgegenhaltungen:
- EP-A- 155 328
- EP-A- 185 292
- DE-B- 1 299 103
- DE-C- 3 512 488
- US-A- 1 812 942
- US-A- 1 870 774
- US-A- 1 872 656
- US-A- 1 908 727

## Beschreibung

Die Erfindung bezieht sich auf eine Vorrichtung zum Teilen von tiefgefrorenen Lebensmitteln, insbesondere Fisch, in Form von quaderförmigen Körpern, wie Platten, in eine Vielzahl von kleineren quaderförmigen Einheiten, wie Stäbchen, bestehend aus einem Tisch, der auf seiner Oberseite eine Transportstrecke für die quaderförmigen Körper bildet, über die die quaderförmigen Körper mit Transportmitteln schiebbar sind, einer Vielzahl von mit gegenseitigem Abstand nebeneinander angeordneten Sägeelementen und mit an der Oberseite der quaderförmigen Körper und/oder der kleineren Einheiten angreifender Niederhaltern und mit einer mit Blasdüsen bestückten Auftragseinheit für das beim Teilen zerspante Lebensmittel.

Tiefgefrorene Lebensmittel lassen sich nur durch Zersägen in kleinere Einheiten teilen. Der damit zwangsläufig verbundene Anfall an zerspantem Gut, der von der Dicke der Sägeelemente abhängt, ist erheblich. Um den mit dem zerspanten Gut nicht zu vermeidenden Schnittverlust möglichst gering zu halten, sind bei einer bekannten Vorrichtung der eingangs genannten

Art (DE 3512488 C2) die als Kreissägeblätter ausgebildeten Sägeelemente oberhalb der Tischplatte angeordnet und von einer Auffanghaube umgeben, die mit Blasdüsen bestückt ist, um aufgefangenes zerspantes Gut auf die kleineren quaderförmigen Einheiten aufzutragen. Das Auffangen und Auftragen wird dabei von einer auf den kleineren Einheiten aufliegenden Andrückrolle unterstützt. Nachteilig ist bei dieser Art der Wiedergewinnung eines Teils des zerspanten Lebensmittels, daß durch das wiederaufgetragene zerspante Gut die kleinen, quaderförmigen Einheiten an ihren Trennfugen wieder zusammenbacken und die Oberfläche der Einheiten kein optimales Aussehen bekommt.

Aufgabe der Erfindung ist es, eine Vorrichtung der eingangs genannten Art zu schaffen, bei der gewährleistet ist, daß es nach der Trennung der quaderförmigen Körper in kleinere Einheiten nicht zu einem Zusammenbacken der kleineren Einheiten an den Trennfugen kommt, und ferner, daß das Aussehen der Oberfläche der kleineren quaderförmigen Einheiten durchaus aufgetragene zerspante Lebensmittel praktisch nicht beeinträchtigt ist.

Diese Aufgabe wird erfindungsgemäß dadurch gelöst, daß die Sägeelemente als Sägebänder mit von einem Tisch nach oben gerichteter Laufrichtung ausgebildet sind und im Blasluftstrom der Blasdüsen liegen, der auf die über dem Tisch befindliche Transportstrecke des Tisches in Transportrichtung vor den Sägebändern gerichtet ist.

Der Einsatz von Sägebändern in Verbindung mit dem Blasluftstrom und dem Ort der Auftragung vor dem Schnitt gewährleistet einen minimalen Schnittverlust bei gleichzeitig optimalem Aussehen der anderen quaderförmigen Einheiten. Ein erneutes Zusammenbacken der kleineren Einheiten kann nicht auftreten, da nach dem Schnitt kein zerspantes Lebensmittel aufgetragen wird, das in den Bereich der Schnittfugen eindringen kann. Auch an den Schnittfugen bleiben deshalb die Schnitte sauber.

Da das zerspante Gut an einer Stelle auf die quaderförmigen tiefgefrorenen Körper aufgetragen wird, wo es durch die Schnitte örtlich noch nicht aufgewärmt worden ist, ist sichergestellt, daß es durch den Kälteinhalt der Körper gleichmäßig auf der gesamten Oberfläche wieder anbackt.

Nach einer Ausgestaltung der Erfindung ist in Transportrichtung vor den Sägebändern eine Andrückrolle vorgesehen, die auf der Oberseite der quaderförmigen Körper aufliegt. Diese Andrückrolle kann so positioniert werden, daß sie in an sich bekannter Weise das zerspante Lebensmittel auf die Oberfläche der noch nicht geteilten Körper drückt und glättet. Dabei arbeitet die Andrückrolle besonders wirkungsvoll, wenn sie erwärmt ist. Deren Wirkung kann weiter verbessert werden, wenn der Blasluftstrom auf die Andrückrolle gerichtet ist, so daß das zerspante Gut nicht unmittelbar auf die quaderförmigen Körper gelangt, sondern erst über die Andrückrolle. Sofern diese erwärmt ist, wird das zerspante Gut weiter aufgeweicht und läßt sich dann noch besser auftragen. Dieser Effekt läßt sich auch dadurch erreichen oder verstärken, daß die Blasluft selbst erwärmt ist.

Nach einer weiteren Ausgestaltung der Erfindung sind in Transportrichtung der quaderförmigen Körper hinter den Sägebändern mit ihnen ausgerichtete Distanzscheiben, die in die Trennfugen zwischen den kleiner Einheiten eintauchen und zwischen den Distanzscheiben angeordnete und auf die Oberseite der kleineren Einheiten aufliegende angetriebene Transportrollen vorgesehen. Diese Distanzscheiben und Transportrollen sorgen zusätzlich dafür, daß die Einheiten präzise mit gegenseitigem Abstand geführt werden.

Im folgenden wird die Erfindung anhand einer ein Ausführungsbeispiel darstellenden Zeichnung näher erläutert. Im einzelnen zeigen:

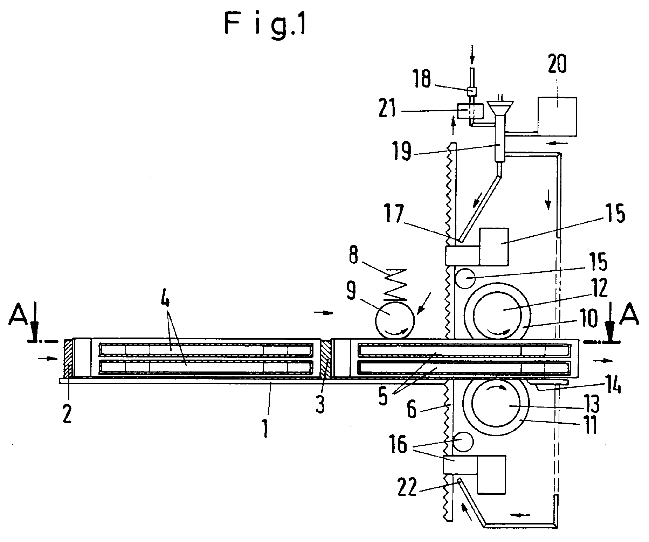

- Figur 1: eine Vorrichtung zum Teilen von tiefgefrorenen Lebensmitteln in Seitenansicht
**und**

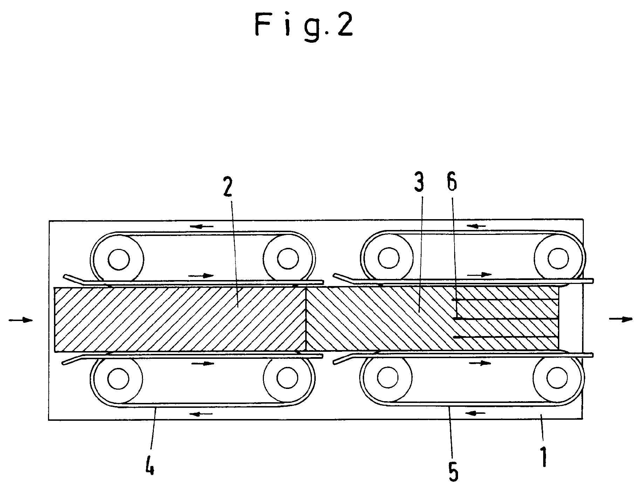

- Figur 2: die Vorrichtung gemäß Figur 1 im Schnitt nach der Linie A-A der Figur 1.

Auf einem Tisch 1 aufliegende quaderförmige Körper 2,3 werden von einer kombinierten Zentrier- und Transporteinrichtung in Richtung einer aus einer Vielzahl von mit Abstand voneinander angeordneten Sägebändern 6 bestehenden Bandsäge vorgeschoben. Die Zentrier- und Transporteinrichtung weist zwei hintereinanderliegende Paare von Antriebsmitteln auf, die aus über Umlenk- und Antriebsrollen laufenden Bändern 4,5 bestehen, die an den Seiten der Körper 2,3 anliegen, so daß sie nicht nur dem Transport, sondern auch der seitlichen Ausrichtung der Körper 2,3 dienen.

In Transportrichtung vor den Sägebändern 6 ist eine an einer Feder 8 abgestützte Andrückrolle 9 vorgesehen, die einen durchgehenden glatten Mantel hat und die an der Oberseite des der Sägebänder 6 zugeführten Körpers 3 anliegt. In Transportrichtung hinter den Sägebändern 6 befinden sich oberhalb und unterhalb des Transporttisches 1 jeweils ein Satz von angetriebenen Distanzscheiben 10,11 und im Durchmesser kleineren Transportrollen 12,13. Für die unteren Distanzscheiben 11 und Transportrollen 13 und die Bandsäge ist im Tisch 1 eine Aussparung 14 vorgesehen, so daß die Distanzscheiben 10,11 in die Trennfugen zwischen den kleineren Einheiten eintauchen können und die Transportrollen 12,13 die kleineren Einheiten zwischen sich einklemmen können. Die Andrückrolle 9 und die Transportrolle 12 fungieren auch als Niederhalter für die Blöcke 3 bzw. kleineren Einheiten.

Die Sägebänder 6 werden durch nicht dargestellte Antriebsmittel von unten nach oben angetrieben. Jedem Sägeband 6 sind oberhalb und unterhalb des Tisches 1 Führungsmittel 15,16 zugeordnet, die das Band 6 rückseitig abstützen und seitlich führen. Darüber hinaus ist jedem Sägeband 6 oberhalb und unterhalb des Tisches 1 eine Blasdüse 17,22 zugeordnet, in deren Blasmittelstrom das Sägeband 6 liegt. Der Blasmittelstrom der Blasdüse 17 ist auf die der Sägebänder 6 zugekehrte Seite der Oberfläche der Andrückrolle 9 gerichtet, so daß an dem Sägeband 6 haftendes zerspantes Gut vom Blasmittelstrom mitgenommen und auf die Andrückrolle 9 aufgetragen wird, die es auf die Oberfläche des Körpers 3 aufträgt und glättet. Im Blasmittelstrom der Düse 17 und der weiteren Düse 22 liegen aber auch die Führungsmittel 15,16, so daß diese vom zerspanten Gut freigehalten werden.

Die Blasmittelzufuhr erfolgt von einer nicht dargestellten Blasmittelquelle über ein Steuerventil 18 und einem Mischdruckbehälter 19. Im Mischdruckbehälter 19 können dem Blasmittel aus einem Aromastoffbehälter 20 Aromastoffe beigemischt werden. Vorzugsweise ist das zugeführte Blasmittel erwärmt. Sofern es nicht bereits erwärmt aus der Blasmittelquelle kommt, kann es über einen Durchlauferhitzer 21 erwärmt werden. Aufgrund seiner Erwärmung läßt sich mit dem Blasmittel das zerspante Gut leichter von den Sägebändern der Bandsäge 6 ablösen und wird zugleich in eine für den Auftrag besser geeignete Konsistenz überführt. Dies wird unterstützt, wenn die Andrückrolle 9, mit der das zerspante Gut auf die Oberseite des Körpers 3 aufgetragen wird, ebenfalls erwärmt ist. Darüber hinaus wird durch die erwärmte Andrückrolle 9 ein Glätteffekt erzielt.

Die besonderen Vorteile der Erfindung bestehen darin, daß nach dem Durchtrennen der Körper 3 die kleineren Einheiten nicht weiter behandelt werden, so daß deren Erscheinungsbild nicht beeinträchtigt wird. Dadurch, daß das zerspante Gut vor dem Schnitt auf den noch ungeteilten Körper 3 insbesondere unter Verwendung von Wärme aufgetragen wird, läßt sich das zerspante Gut gleichmäßig und sehr glatt auftraben. Da die Verteilung der Kälte an dieser Stelle gleichmäßig ist, ergibt sich auch ein gleichmäßiges Erscheinungsbild.

Von besonderer Bedeutung ist, daß durch diese Art die Rückgewinnung von zerspantem Gut gegenüber bekannter Verfahren erheblich gesteigert ist. Darüber hinaus erlaubt der Einsatz von Sägebändern im Vergleich zum Einsatz von Kreissägeblättern die Verarbeitung von quaderförmigen Körpern größerer Höhe, ohne daß es erforderlich wäre, die Dicke der Sägebänder zu erhöhen. Im Gegensatz zu Kreissägeblättern vertragen Sägebänder auch eine größere seitliche Belastung. In Verbindung mit der an sich bekannten Zentriereinrichtung die eine Kopplung der Führung der Sägebänder erlaubt, ist sogar ein gewisser seitlicher Verlauf zur genauen Schnittführung in den Körpern erwünscht.

## Patentansprüche

1. Vorrichtung zum Teilen von tiefgefrorenen Lebensmitteln, insesondere Fisch, in Form von quaderförmigen Körpern, wie Platten, in eine Vielzahl von kleineren quaderförmigen Einheiten, wie Stäbchen, bestehend aus einem Tisch (1), der auf seiner Oberseite eine Transportstrecke für die quaderförmigen Körper (2,3) bildet, über die die quaderförmigen Körper (2,3) mit Transportmitteln (4,5) schiebbar sind, einer Vielzahl von mit gegenseitigem Abstand nebeneinander angeordneten Sägeelementen (6) und mit an der Oberseite der quaderförmigen Körper (2,3) und/oder kleineren Einheiten angreifender Niederhaltern (9,12,13) und mit einer mit Blasdüsen bestückten Auftragseinheit (9,17) für zerspante Lebensmittel,
**dadurch gekennzeichnet,** daß die Sägeelemente (6) als Sägebänder mit von dem Tisch (1) nach oben gerichteter Laufrichtung ausgebildet sind und im Blasluftstrom der Blasdüsen (17) liegen, der auf die über dem Tisch befindliche Transportstrecke des Tisches (1) in Transportrichtung vor den Sägebändern (6) gerichtet ist.

2. Vorrichtung nach Anspruch 1,
**dadurch gekennzeichnet,** daß in Transportrichtung vor den Sägebändern (6) eine Andrückrolle (9) vorgesehen ist, die auf der Oberseite der quaderförmigen Körper (2,3) aufliegt.

3. Vorrichtung nach Anspruch 1 und 2,
**dadurch gekennzeichnet**, daß die Andrückrolle (9) erwärmt ist.

4. Vorrichtung nach einem der Ansprüche 1 bis 3,
**dadurch gekennzeichnet,** daß der Blasluftstrom auf die Andrückrolle (9) gerichtet ist.

5. Vorrichtung nach einem der Ansprüche 1 bis 4,
**dadurch gekennzeichnet,** daß in Transportrichtung der quaderförmigen Körper (2,3) hinter den Sägebändern (6) mit ihnen ausgerichtete Distanzscheiben (10,11), die in die Trennfugen zwischen den kleineren Einheiten eintauchen, und zwischen den Distanzscheiben (10,11) angeordnete und auf die Oberseite der kleineren Einheiten aufliegende angetriebene Transportrollen (12,13) vorgesehen sind.

## Claims

1. An apparatus for dividing deep-frozen foodstuffs, more particularly fish, in the form of parallelipipedic bodies, such as slabs, into a plurality of smaller parallelipipedic units, such as fingers, comprising: a table (1) which forms on its top side a conveying way for the parallelipipedic bodies (2, 3) over which the parallelipipedic bodies (2, 3) can be slid by conveying means (4, 5); a plurality of spaced-out saw elements (6) disposed one beside the other; hold-down elements (9, 12, 13) engaging with the top side of the parallelipipedic bodies (2, 3) and/or smaller units; and an applicator unit (9, 17), equipped with blowing nozzles for detached foodstuffs, characterized in that the saw elements (6) are constructed in the form of saw belts which run upwards from the table (1) and are disposed in the blowing air flow of the blowing nozzles (17), which is directed upstream of the saw belts (6) in the conveying direction on to the conveying distance of the table (1) situated thereabove.

2. An apparatus according to claim 1, characterized in that upstream of the saw belts (6) in the conveying direction a contact pressure roller (9) is provided which bears against the top side of the parallelipipedic bodies (2, 3).

3. An apparatus according to claims 1 and 2, characterized in that the contact pressure roller (9) is heated.

4. An apparatus according to one of claims 1 to 3, characterized in that the blowing air stream is directed at the contact pressure roller (9).

5. An apparatus according to one of claims 1 to 4, characterized in that in the conveying direction of the parallelipipedic bodies (2, 3) spacer discs (10, 11), which enter the parting lines between the smaller units, are disposed downstream of the saw belts (6) and aligned therewith, while driven conveying rollers (12, 13) bearing against the top side of the smaller units are disposed between the spacer discs (10, 11).

## Revendications

1. Dispositif permettant de diviser des produits alimentaires surgelés, notamment du poisson, se présentant sous la forme de blocs parallélépipédiques tels que des plaquettes, en de multiples unités parallélépipédiques plus petites telles que des bâtonnets, constitué d'une table (1), qui forme sur sa surface supérieure une voie de transport des blocs parallélépipédiques (2, 3) sur laquelle ces blocs parallélépipédiques (2, 3) peuvent être poussés à l'aide de moyens de transport (4, 5), de plusieurs éléments de sciage (6), disposés côte à côte à une certaine distance mutuelle, des organes de maintien (9, 12, 13), exerçant leur action sur la face supérieure des blocs parallélépipédiques (2, 3) et/ou des unités plus petites, et d'une unité d'application (9, 17) pour les produits alimentaires découpés qui est pourvue de buses de soufflage, caractérisé en ce que les éléments de sciage (6) sont réalisés sous la forme de scies en ruban ayant une direction de déplacement orientée de la table (1) vers le haut et sont disposés dans le courant d'air de soufflage des buses de soufflage (17) qui est orienté sur la voie de transport de la table (1) qui se trouve au-dessus de cette table, en amont des scies en ruban (6) suivant la direction de transport

2. Dispositif suivant la revendication 1, caractérisé en ce qu'un rouleau d'appui (9), qui prend appui sur la face supérieure des blocs parallélépipédiques (2, 3), est disposé en amont des scies en ruban (6) suivant la direction de transport.

3. Dispositif suivant l'une des revendications 1 et 2, caractérisé en ce que le rouleau d'appui (9) est chauffé.

4. Dispositif suivant l'une des revendications 1 à 3, caractérisé en ce que le courant d'air de soufflage est dirigé sur le rouleau d'appui (9).

5. Dispositif suivant l'une des revendications 1 à 4, caractérisé en ce qu'en aval des scies en ruban (6) suivant la direction de transport des blocs parallélépipédiques (2, 3), il est prévu des disques séparateurs (10, 11), disposés dans l'alignement de ces scies en ruban et pénétrant dans les intenvalles de séparation situés entre les unités plus petites, et des rouleaux de transport (12, 13) entraînés qui sont disposés entre les disques séparateurs (10, 11) et prennent appui sur la face supérieure des unités plus petites.
